# EUROPEAN PATENT APPLICATION

(11) **EP 1 039 321 A2**
(43) Date of publication of application: **27.09.2000**
(21) Application number: 00302032.8
(22) Date of filing: 14.03.2000
(51) Int. Cl.: G02B 6/38

(54) **Optical fiber ferrule apparatus**

(30) Priority: 24.03.1999 US 285186
(71) Applicant: LUCENT TECHNOLOGIES INC., Murray Hill, New Jersey 07974-0636 (US)
(72) Inventor: Shahid, Muhammed Afzal, Snellville, Georgia 30278 (US)
(74) Representative: Johnston, Kenneth Graham

(57) **Abstract**

The invention is as defined by the claims. Embodiments of the invention include an optical fiber ferrule, a method of making an optical fiber ferrule and an optical fiber communication system in which at least one optical fiber ferrule has a body with an axially-extending bore formed therethrough at a location radially offset from the longitudinal axis or axis of symmetry of the ferrule body. The offset bore provides for the core of an optical fiber subsequently positioned therein to be slightly offset with respect to the core of an optical fiber positioned within a conventional ferrule aligned therewith. The offset alignment between the two optical fibers is useful in establishing an offset launch condition, which improves bandwidth performance of an optical system, for example, an optical system having a launching single-mode fiber coupled to a receiving multimode fiber. Embodiments of the invention provide an radial offset that is lateral, vertical or a combination of both. Also, for offset launch conditions comprising a single-mode optical fiber launching into a multimode optical fiber, the radial offset is the result of an offset bore in the single-mode ferrule, the multimode ferrule or a resulting combination of offset bores in both ferrules.

## Description

### Background of the Invention

### 1. Field of the Invention

The invention relates to optical fibers. More particularly, the invention relates to optical fiber ferrules used in optical fiber connectors.

### 2. Description of the Related Art

The use of optical fibers within communication and data transmission systems is well established. Within such systems, the ability to efficiently couple optical signals from one optical fiber to another is critical, whether it be in the form of permanent or semi-permanent splices or demountable fiber connectors. Thus, optical fiber connectors have been developed to allow optical fibers to be coupled to and uncoupled from other optical fibers or optical devices (that is, sources/transmitters or receivers of optical signals). Such connectors must provide precise alignment and minimum spacing at connected fiber ends for efficient coupling of the transmitted light. Furthermore, the connectors should be easily and reliably connected, disconnected and reconnected.

Because optical loss at the interface of fiber connections is a major consideration, critical components of optical fiber connectors include the optical fiber plug, housing and ferrule. Ferrules are used to align, hold, and protect the fragile ends of optical fibers at the point of connection or termination and therefore have precise dimensional tolerances. When the end of an optical fiber is inserted and fixed (typically glued or bonded) within a ferrule, the probability of damaging the optical fiber is significantly reduced, especially during the grinding and/or polishing processes required to produce a smooth surface on the fiber end face. Ferrules typically are made from materials having a low coefficient of thermal expansion, high elastic modulus, and high hardness. Ceramics are often the material of choice because they exhibit such properties and are capable of being polished to a high degree of smoothness and flatness. Cylindrical sleeves are used to align a pair of finished ferrules.

Typically, ferrules have an axially extending bore or capillary running along the ferrule's center or longitudinal axis into which a stripped optical fiber is positioned. Conventionally, the connector devices align opposing ferrules in axial alignment with the end faces of the ferrules in face-to-face contact and, preferably, with the opposing optical fibers axially aligned and in face-to-face contact.

However, the need to improve ferrule connector coupling arrangements that support increased bandwidth continues. Accordingly, what is needed is a ferrule that improves the coupling with conventional optical fibers within a conventional ferrule to support increased bandwidth.

### Summary of the Invention

The invention is as defined by the claims. The invention is embodied in an optical fiber ferrule and method for making an optical fiber ferrule that supports and positions the optical fiber with respect to another optical fiber for increased bandwidth performance of a given multimode optical fiber. Embodiments of the invention provide an optical fiber ferrule having a body with an axially-extending bore formed therethrough at a location radially offset from the longitudinal axis or axis of symmetry of the ferrule body. In this manner, the core of an optical fiber subsequently positioned therein is slightly offset with respect to the core of an optical fiber positioned within a conventional ferrule connector for coupling therebetween, using a conventional sleeve or other optical connector hardware. Accordingly, when the two ferrules are coupled together within a conventional optical fiber ferrule connector, one optical fiber core is slightly offset with respect to the other optical fiber core. According to embodiments of the invention, the inventive optical fiber ferrule is configured in such a way that the offset relationship between the optical fibers is a lateral misalignment, a vertical misalignment, or a combination of the two. The offset relationship is advantageous, for example, when establishing an offset launching condition of an optical signal from a single-mode fiber to a multimode fiber, in that the offset launching condition supports improved bandwidth therebetween.

According to this embodiment of the invention, the axially-extending bore is radially offset from the longitudinal axis of said ferrule body by a distance within the range from approximately 6-27 microns (µm). Alternatively, the axis of the axially-extending bore is substantially parallel with the longitudinal axis of its ferrule body.

According to another embodiment of the invention, a method of making an optical fiber connector ferrule that supports improved bandwidth comprises the step of forming an axially-extending bore, within the body of the connector ferrule, that is radially offset from the longitudinal axis of the ferrule body. The axially-extending bore is offset to the extent that, when the connector ferrule is aligned with a conventional connector ferrule, for example, within an optical fiber ferrule connector, an offset launch condition is established between the optical fibers. The offset launch condition supports improved bandwidth, for example, between arrangements having a launching single-mode fiber and a receiving multimode fiber.

According to this embodiment of the invention, the axially-extending bore is offset from the longitudinal axis of its ferrule body by approximately 6-27 microns (µm). When the optical fiber is used in an offset launch fiber coupling having a multimode optical fiber with a diameter of approximately 50 microns (µm), its axially-extending bore has a radial offset of approximately 6-20 microns (µm) from the longitudinal axis of its ferrule body. Similarly, when the optical fiber is used in an offset launch fiber coupling having a multimode optical fiber with a diameter of approximately 62.5 microns (µm), its axially-extending bore has a radial offset of approximately 13-27 microns (µm) from the longitudinal axis of its ferrule body. Also, according to various embodiments of the invention, the radially offset, axially-extending bore is substantially parallel with the longitudinal axis of its ferrule body.

According to another embodiment of the invention, an optical fiber communication system including an offset launch coupling is disclosed. The system includes at least a first optical fiber ferrule with a single-mode optical fiber inserted within an axially-extending bore formed therethrough and a second optical fiber ferrule with a multimode optical fiber inserted within an axially-extending bore formed therethrough. The ferrules are aligned within, for example, an optical fiber ferrule connector using a conventional sleeve. At least one of the ferrules has an axially-extending bore radially offset from the ferrule's longitudinal axis or axis of symmetry to the extent that an offset launch condition is established by the fiber coupling. In one embodiment, the bore of the single-mode optical fiber ferrule is slightly offset and the bore of the multimode optical fiber ferrule is not. In another embodiment the bore of the multimode optical fiber ferrule is slightly offset and the bore of the single-mode optical fiber ferrule is not. In yet another embodiment, both the single-mode optical fiber ferrule and the multimode optical fiber ferrule have slightly offset bores wherein the collective misalignment establishes an offset launch condition. The establishment of the offset launch condition coupling improves the bandwidth performance in an optical fiber system.

### Brief Description of the Drawings

The nature, advantages and various additional features of the invention will appear more fully upon consideration of the experimental data and illustrative embodiments now to be described in detail in the accompanying drawings.

In the drawings:
Fig. 1 is a side, cross-sectional view of a conventional optical fiber ferrule connector;
Fig. 2 is a perspective, partial cross-sectional view of a conventional optical fiber connector ferrule;
Fig. 3 is a schematic, cross-sectional view of an offset launch condition from a single-mode optical fiber to a multimode optical fiber;
Fig. 4 is a schematic illustration of an offset launch condition from a single-mode optical fiber to a multimode optical fiber;
Fig. 5 is a schematic illustration of an offset launch condition from a single-mode optical fiber to a multimode optical fiber according to various embodiments of the invention;
Fig. 6 is a cross-sectional view of an optical fiber ferrule connector according to an embodiment of the invention;
Fig. 7 is a cross-sectional view of the optical fiber ferrule connector according to another embodiment of the invention; and
Fig. 8 is a simplified block diagram of a method for making an optical fiber connector ferrule according to embodiments of the invention.

### Detailed Description

In the following description similar components are referred to by the same reference numeral in order to simplify the sequential aspect of the drawings or to enhance the understanding of the invention through the description of the drawings.

Although specific features, configurations and arrangements are discussed hereinbelow, it should be understood that such is done for illustrative purposes only. A person skilled in the relevant art will recognize that other configurations, arrangements and steps are useful without departing from the spirit and scope of the invention.

It has been recognized that the splice performance in bandwidth, skew/jitter and loss is improved if an optical signal from a single-mode fiber is launched into a multimode fiber in a manner that partially fills the optical modes of the multimode fiber. This selective offset launch condition underfills a multimode fiber and excites only a portion of available modes that then propagate over a relatively short distance without appreciable degradation within the multimode fiber. However, offset launch conditions as just described have been difficult to establish because of the inability to provide the convenience and consistent accuracy necessary therefor.

Embodiments of the invention are based on the advantageous realization that optical fiber connector ferrules are capable of being manufactured so that offset launch conditions are reliably established when the inventive ferrule is mated with conventional ferrules in conventional optical fiber ferrule connectors. According to embodiments of the invention, optical fiber connector ferrules are manufactured in such a way that their axially-extending bore is positioned slightly offset from the center or longitudinal axis of the ferrule body. In this manner, the core of the optical fiber subsequently positioned therein is slightly offset with respect to an optical fiber core positioned within a conventional ferrule connector. Thus, an offset launch condition is reliably established between a single-mode optical fiber launching to a multimode fiber in a optical fiber ferrule connector wherein one of the connector ferrules is configured according to embodiments of the invention and the other connector ferrule has a conventional configuration.

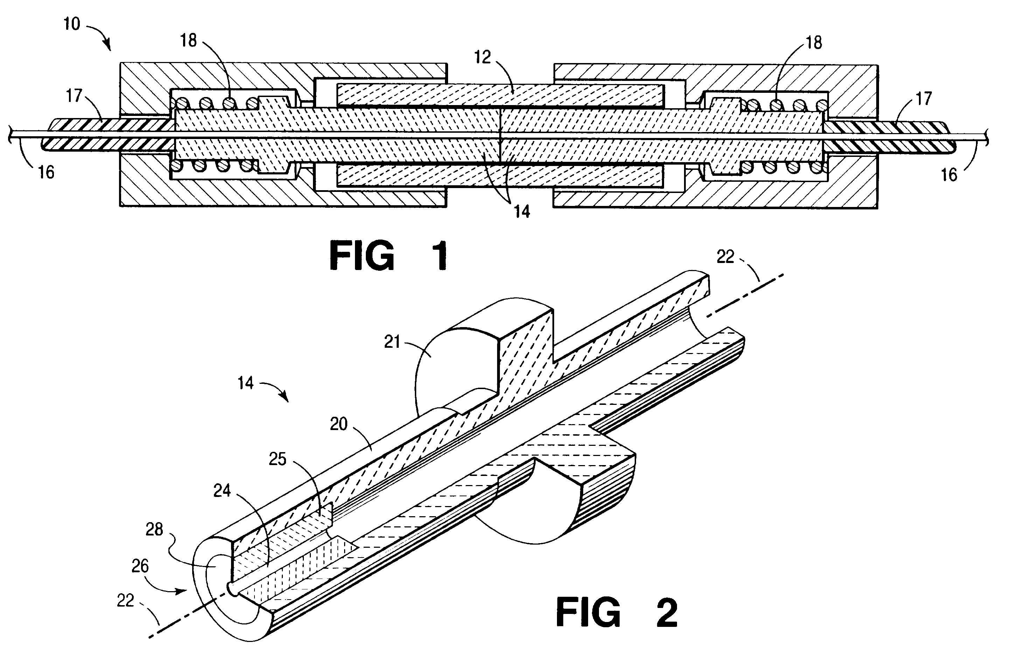

Referring now to Fig. 1, a conventional optical fiber ferrule connector 10 is shown. The connector 10 includes a connector shell 11 and an alignment sleeve 12 for aligning a pair of ferrules 14. Optical fibers 16 to be aligned are partially stripped of their cable sheaths (shown generally as 17) and fixably attached (for example, bonded) within axial-extending bores formed in the ferrules 14. Typically, the ferrules 14 are held in place within the connector 10 using a retaining mechanism 18, for example, a spring.

Conventional ferrules have end faces that are smooth and square, thus allowing for butt-coupling. In this manner, either the fiber end is cleaved prior to its insertion into the ferrule or the fiber end is inserted into the ferrule and bonded therein prior to cleaving the fiber end close to the ferrule end face and polishing the fiber end surface until flush with the end face of the ferrule.

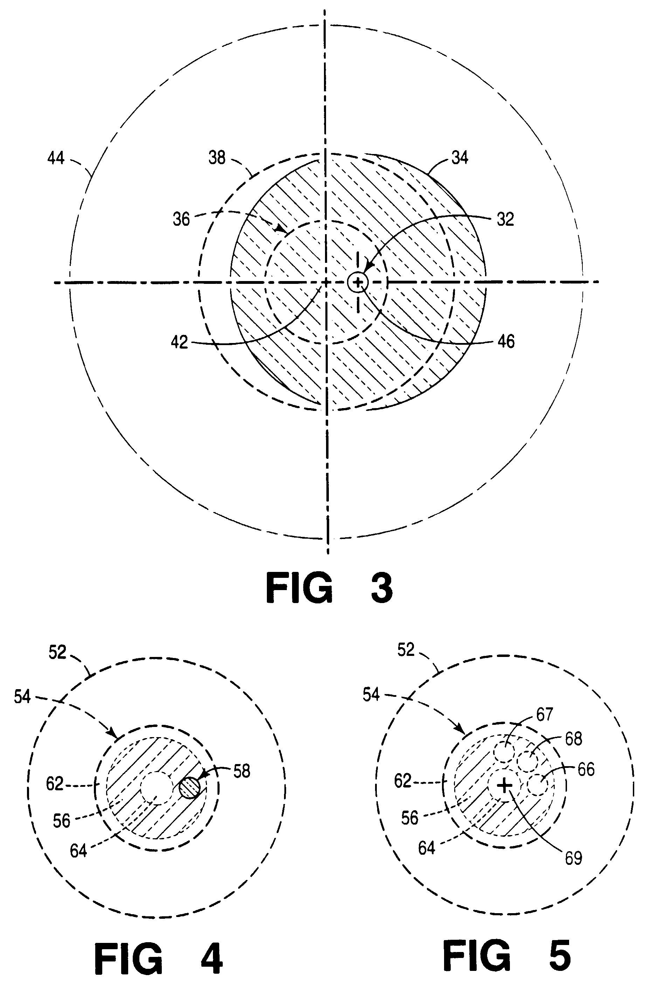

Referring now to Fig. 2, one type of conventional optical fiber connector ferrule 14 is shown. Typically, the connector ferrule 14 includes a body 20 that is symmetric and made of, for example, ceramic, stainless steel, phosphorous bronze or other suitable material, that is, a material that generally has a low coefficient of thermal expansion, a high elastic modulus, and high hardness. Ceramics often are the material of choice because they exhibit such properties and are capable of being polished to high smoothness and flatness.

A portion of the ferrule body 20 may include a flange 21, for example, for assisting a retaining mechanism in keeping the ferrule body 20 properly positioned within a ferrule connector. Typically, the ferrule body 20 is solid but includes a cylindrical bore 24 formed concentrically through the longitudinal or true center axis 22 of the ferrule body 20. In such an arrangement, the cylindrical bore 24 retains and axially extends an optical fiber through the length of the ferrule body 20. Alternatively, as shown in Fig. 2, the ferrule body 20 is relatively hollow but has a capillary tip 25 positioned in the distal end 26 of the ferrule body 20. The capillary tip 25, which is made of, for example, ceramics or other suitable material, protects and positions the distal end of an optical fiber, that is, the end of the optical fiber that is to be aligned with another optical fiber. The distal end 26 and the capillary tip 25 of the ferrule 14 includes an end face 28 with a surface that is relatively smooth or otherwise conducive to butt-coupling with other ferrules.

The optical fiber connector ferrule 14 is useful for retaining and positioning all types of optical fiber, including both single-mode optical fiber and multimode optical fiber. Typically, the outer diameter of the connector ferrule 14 is, for example, approximately 1.25 millimeters (mm) or approximately 2.50 mm. However, it is possible to manufacture a connector ferrule of any suitable size. The axially-extending bore has a diameter sized to comfortably fit an optical fiber stripped of its cable sheath and buffer layers, for example, approximately 125 microns (µm).

Conventionally, an optical fiber includes a core region surrounded by a cladding region. Although the diameter of the core of a single-mode optical fiber is approximately 2-10 µm and the diameter of the core of a multimode optical fiber is approximately 50-65 µm, the total diameter of the cladding region surrounding the core region for a single-mode or multimode optical fiber is approximately 125 µm. The optical fiber cladding region typically is covered, in general, with one or more buffer protection layers, which typically has an outer diameter of approximately 250 µm. Finally, some form of protective cabling sheath typically is formed around one or more optical fibers.

Optical fiber to be positioned within the axially-extending bore formed in a connector ferrule typically is stripped of its cable sheath and buffer layers. Thus, the axially-extending bores formed in connector ferrules typically have a diameter that is slightly larger than the stripped fiber portion. However, it is possible for the aforementioned dimensions to be altered as dictated by need.

Conventionally, for optical fibers, it is desirable for the core region be coaxial with the cladding region. Similarly, for connector ferrules, it conventionally is desirable for the axially-extending bores to be formed coaxial with the axis of symmetry of the ferrule. That is, the axially-extending bore is desirably coaxial with the bore so that, when two ferrules are aligned, their respective axes of symmetry are coaxially aligned and thus the optical fiber cores are axially aligned.

However, variations inherent in optical fiber manufacturing processes prevent the manufacture of optical fiber having core and cladding regions that are perfectly coaxial. Furthermore, due to variations inherent in connector and ferrule manufacturing processes, consistent positioning of a perfectly symmetric axially-extending bore at the true center axis of a perfectly symmetric ferrule body so that the two are coaxial generally is not possible on a consistent basis.

For example, for a conventional single-mode ceramic ferrule, the longitudinal axis of the axially-extending bore typically is within approximately 1.0 micron of the true axis of symmetry of the ferrule. Similarly, for a conventional multimode ceramic ferrule, the longitudinal axis of the bore typically is within a few microns of the true axis of symmetry of the ferrule. Such deviations conventionally are acceptable from a commercial standpoint.

As mentioned, conventionally, the desire is to minimize these deviations so that (within accepted tolerances) optical fiber cores are coaxial with their respective cladding regions and optical fiber ferrule bores are coaxial with their respective ferrule's axis of symmetry. However, as discussed hereinabove, improved bandwidth performance is possible when certain offset launch conditions are established between a single-mode optical fiber and a multimode optical fiber. Accordingly, embodiments of the invention are based on the realization that the purposeful misalignment of a launching single-mode fiber with respect to a receiving multimode fiber improves splice performance in bandwidth, skew/jitter and reduces loss.

According to embodiments of the invention, offset launch conditions are achieved by manufacturing optical fiber connector ferrules with offset or misaligned axially-extending bores so as to cause the desired misalignment between the launching single-mode optical fiber and the receiving multimode optical fiber. The degree of misalignment of the ferrule bore is such that offset launch conditions are established reliably and reproducibly when the misaligned ferrule is mated with a conventional ferrule, for example, in a conventional optical fiber ferrule connector. Thus, an offset launch condition is reliably and reproducibly established between a single-mode optical fiber launching to a multimode fiber in a optical fiber ferrule connector wherein one of the connector ferrules is configured according to embodiments of the invention and the other connector ferrule has a conventional configuration. Alternatively, both ferrules to be mated can have misaligned bores so that, when mated, the combined misalignment reliably establishes the desired offset launch conditions.

Referring now to Fig. 3, a schematic illustration of an offset launch condition as established by an embodiment of the invention is shown. In this illustration, examples of the relative positions of a single-mode optical fiber and a multimode optical fiber within their respective ferrules that causes the desired offset launch condition is shown. That is, the position of a single-mode core region 32, a single-mode cladding region 34, a multimode core region 36 and a multimode cladding region 38 are shown overlayed with respect to the longitudinal axis or theoretical axis of symmetry 42 of an exemplary ferrule position (shown as 44). For purposes of illustration, Fig. 3 assumes the single-mode optical fiber, the multimode optical fiber and the ferrule and all perfectly symmetric, that is, no dimensional imperfections due to manufacturing processes are taken into account.

As can be seen, both the multimode core region 36 and the multimode cladding region 38 are both coaxial with the longitudinal axis 42 of the ferrule position 44. Furthermore, the single-mode core region 32 is coaxial with the single-mode cladding region 34. However, the single-mode optical fiber (that is, the single-mode core region 32 and the single-mode cladding region 34) is offset such that a longitudinal axis 46 of the single-mode optical fiber is neither coaxial with the ferrule position 44 nor the multimode optical fiber (that is, not coaxial with the longitudinal axis 42). Rather, as shown, the single-mode longitudinal axis 46 is positioned somewhere within the multimode core region 36.

It should be noted that although variations due to manufacturing processes are not shown, the desired offset of the single-mode optical fiber is larger than conventional manufacturing processes variations. Thus, according to embodiments of the invention, the single-mode optical fiber longitudinal axis 46 is offset, for example, more than approximately 10 µm, which offset is more than typical manufacturing variation tolerances. For example, as discussed hereinabove, single-mode optical fiber cores typically deviate no more than approximately 1.5 µm from true center of a ferrule and multimode optical fiber cores typically deviate less than approximately 6 µm from true center of a ferrule.

Also, as will be shown and discussed in greater detail hereinbelow, according to alternative embodiments of the invention, the single-mode optical fiber is coaxial with the longitudinal axis of the ferrule and the multimode optical fiber is offset with respect to both the single-mode optical fiber and the ferrule. In such alternative embodiments of the invention, the ferrule housing the receiving multimode optical fiber would have a bore whose axis is radially offset from the theoretical axis of symmetry of the ferrule. Thus, the relative position of a launching single-mode optical fiber contained within a conventional ferrule conventionally aligned with the multimode, offset-bore ferrule would be slightly offset with respect thereto to the extent that a desired offset launch condition exists.

Referring now to Fig. 4, a schematic illustration of an offset launch condition as established by an embodiment of the invention is shown. A first region 52 represents the area occupied by the cladding region of a multimode optical fiber. As is known, the diameter thereof conventionally is approximately 125 µm. A second region 54 represents the area occupied by the core region of the multimode optical fiber, which conventionally is approximately 50 or 62.5 µm in diameter.

A shaded annular region 56 represents the portion and location of the multimode optical fiber core region 54 suitable for establishing an offset launch condition for improved bandwidth performance. A region 58 corresponding in size and location to the core region of a single-mode optical fiber core is shown positioned within the acceptable offset launch region (that is, the shaded annular region 56). It should be understood that the single-mode core region 58 is locatable anywhere within the shaded annular region 56 to establish a proper offset launch condition. Furthermore, it should be noted that an outer area 62 of the multimode core region (that is, outside of the shaded annular region 56) and an inner area 64 of the multimode core region (that is, inside of the shaded annular region 56) are undesirable locations for the single-mode optical fiber core to be positioned for establishing an offset launch condition.

Referring now to Fig. 5, with continuing reference to Fig. 4, a schematic illustration is shown for various locations 66, 67, 68 of the single-mode core region within the multimode optical fiber core region 54 that are suitable for establishing an offset launch condition (that is, the shaded annular region 56). More specifically, Fig. 5 illustrates it is possible for the offset of the single-mode core region with respect to the multimode optical fiber core region 54 to be lateral (shown as 66), vertical (shown as 67) or a combination of lateral and vertical (shown as 68). For multimode optical fibers having a core region with a diameter of approximately 50 µm, the acceptable region for establishing an offset launch condition has a theoretical range between approximately 8 to 18 µm measured radially outward from the true center or longitudinal axis 69 of the multimode core region 54.

Again, it should be noted that the positioning shown in Fig. 4 is relative positioning between the single-mode core region 58 and the multimode core region 54. Thus, it is possible for either the single-mode core region to be offset with respect to the multimode core region in its conventional location, or the multimode core region to be offset with respect to the single-mode core region in its conventional location. Also, it is possible for both the single-mode and multimode core regions to be slightly offset from their respective conventional locations in such a way that the combined positioning produces a suitable offset launch condition.

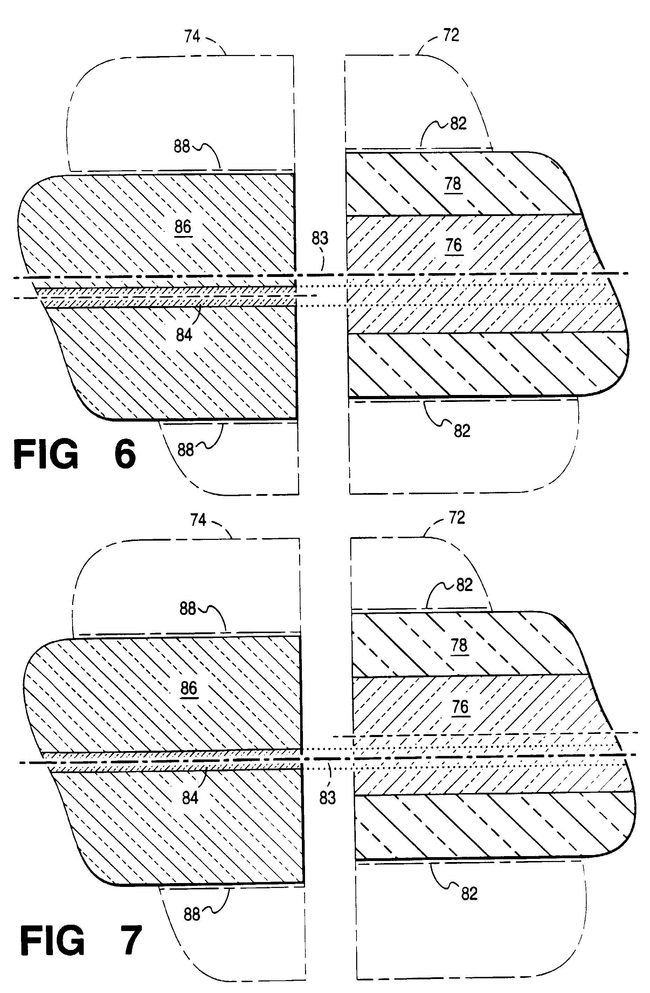

Referring now to Fig. 6, a top view, schematic illustration of an offset launch condition as established by an embodiment of the invention is shown. In this illustration, a multimode ferrule 72 and a single-mode ferrule 74 are shown in coaxial alignment with one another. The multimode ferrule 72 contains a multimode optical fiber, which includes a multimode core region 76 and a multimode cladding region 78. The multimode optical fiber is positioned within an axially-extending bore (shown generally as 82) extending through the multimode ferrule 72. The bore 82 is conventionally located through the center of the multimode ferrule 72, that is, the two are substantially coaxial so that, when the multimode optical fiber is positioned within the bore 82, the multimode optical fiber is substantially coaxial therewith and also is substantially coaxial with the multimode ferrule 72. For references purposes, a center axis 83 is shown generally as the longitudinal axis or axis of symmetry for both the multimode ferrule 72 and the single-mode ferrule 74. However, as discussed above, true coaxial alignment is not likely due to variations associated with the manufacture of the multimode ferrule 72 and the multimode optical fiber, and the formation of the axially-extending bore 82 within the multimode ferrule 72.

The single-mode ferrule 74 contains a single-mode optical fiber, which includes a single-mode core region 84 and a single-mode cladding region 86. The single-mode optical fiber is positioned within an axially-extending bore (shown generally as 88) extending through the single-mode ferrule 74. However, in accordance with embodiments of the invention, unlike the conventional positioning of the bore within the multimode ferrule 72, the bore 88 is formed within the single-mode ferrule 74 at a location slightly offset with respect to the true center (center axis 83) of the single-mode ferrule 74. In this manner, a single-mode optical fiber positioned within the slightly offset bore 88 will thus be slightly offset with respect to the true center or axis of symmetry of the single-mode ferrule 74, which is represented as the center axis 83.

Thus, when the single-mode ferrule 74 is aligned with the multimode ferrule 72 in a conventional manner, the single-mode optical fiber positioned within the bore 88 of the single-mode ferrule 74 is slightly offset with respect to the multimode optical fiber positioned within the bore 82 of the multimode ferrule 72. In this manner, an offset launch condition is established.

It should be noted that, in the embodiment of the invention shown in Fig. 6, the offset launch condition is established by forming the bore 88 of the single-mode ferrule 74 slightly offset from its conventional location. Thus, the single-mode optical fiber positioned therein is offset with respect to a conventionally-positioned multimode optical fiber, that is, a multimode optical fiber positioned in a conventionally-located bore 82 within the multimode ferrule 72 when the single-mode ferrule 74 and the multimode ferrule 72 are conventionally aligned.

According to an alternative embodiment of the invention, shown generally in Fig. 7, the multimode optical fiber is offset with respect to a conventionally-positioned single-mode optical fiber. Referring now to Fig. 7, a top view, schematic illustration of an offset launch condition as established by an alternative embodiment of the invention is shown. In this embodiment, a multimode ferrule 72 and a single-mode ferrule 74 are shown in coaxial alignment with one another. The single-mode ferrule 74 contains a single-mode optical fiber, which includes a single-mode core region 84 and a single-mode cladding region 86. The single-mode optical fiber is positioned within an axially-extending bore (shown generally as 88) extending through the single-mode ferrule 74. The bore 88 conventionally is located through the center of the ferrule 74, that is, the bore 88 and the ferrule 74 are substantially coaxial so that, when the single-mode optical fiber is positioned within the bore 88, the single-mode optical fiber also is substantially coaxial with the bore 88 and the ferrule 74. For references purposes, just as in Fig. 6, the center axis 83 is shown generally as the longitudinal axis of symmetry for both the single-mode ferrule 74 and, as will be evident from subsequent discussion hereinbelow, the multimode ferrule 72. However, as discussed above, true coaxial alignment is not likely due to variations associated with the manufacture of the single-mode ferrule 74 and the single-mode optical fiber, and the formation of the axially-extending bore 88.

The multimode ferrule 72 contains a multimode optical fiber, which includes a multimode core region 76 and a multimode cladding region 78. The multimode optical fiber is positioned within an axially-extending bore (shown generally as 82) extending through the multimode ferrule 72. However, in accordance with an alternative embodiment of the invention, the bore 82 is formed within the multimode ferrule 72 at a location slightly offset with respect to the true center 83 of the multimode ferrule 72 (unlike the conventional positioning of the bore 88 within the single-mode ferrule 74). In this manner, a multimode optical fiber positioned within the slightly offset bore 82 thus will be slightly offset with respect to the true center or axis of symmetry 83 of the multimode ferrule 72.

Thus, when the single-mode ferrule 74 is aligned with the multimode ferrule 72 in a conventional manner, the multimode optical fiber positioned within the bore 82 of the multimode ferrule 72 is offset with respect to the single-mode optical fiber positioned within the bore 88 of the single-mode ferrule 74. In this manner, an offset launch condition is established.

However, unlike the embodiment of the invention shown in Fig. 6, the offset launch condition shown in Fig. 7 is established by offsetting the axially-extending bore 82 of the multimode ferrule 72 from its conventional location. Thus, the multimode optical fiber positioned therein is offset with respect to a conventionally-positioned single-mode optical fiber, that is, a single-mode optical fiber positioned in a conventionally-located bore 88 within the single-mode ferrule 74 when the single-mode ferrule 74 and the multimode ferrule 72 are conventionally aligned.

Furthermore, as discussed hereinabove, according to embodiments of the invention, arrangements in which both the single-mode ferrule and the multimode ferrule have axially-extending bores that are offset with respect to their respective axes of symmetry in such a way that the combined misalignment establishes an offset launch condition for single-mode and multimode optical fibers positioned therein. To a certain extent, such arrangement can be thought of as the most realistic if the variations associated with manufacturing the optical fibers and the ferrules and forming the axially-extending bores within the ferrules are taken into consideration. Such variations inherently produce, at least to a certain extent, some offset from the theoretical, true coaxial positioning.

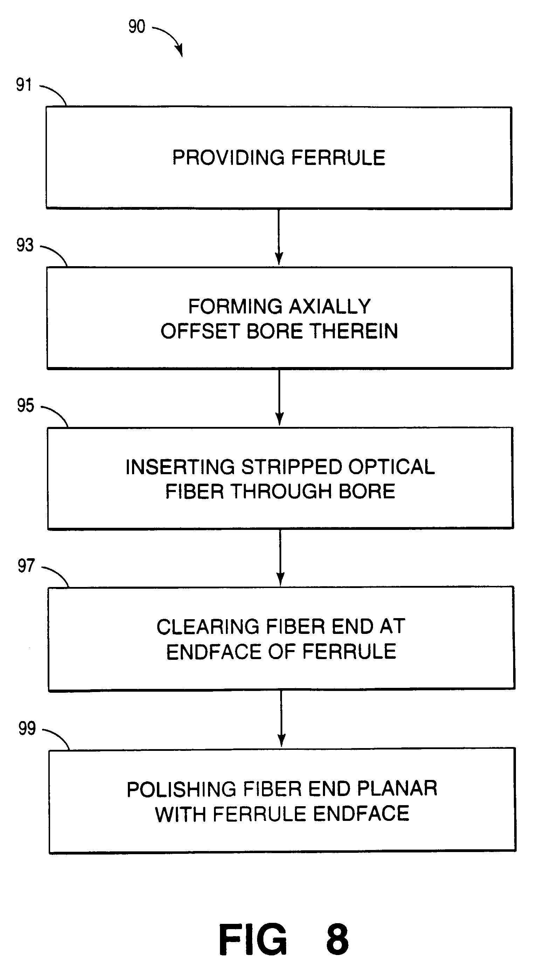

Referring now to Fig. 8, a method 90 of making an optical fiber connector ferrule according to embodiments of the invention is shown. A first step 91 includes providing an optical fiber ferrule. As discussed previously herein, the ferrule is used to align, hold and protect the fragile ends of optical fibers at the point of connection or termination and typically are made from a ceramic or other material having a low coefficient of thermal expansion, high elastic modulus, and high hardness.

The next step 93 of the method 90 is to form an axially-extending bore through the ferrule that is slightly offset from the true longitudinal axis or axis of symmetry of the ferrule. Conventionally, it is desired that the bore be coaxial with the longitudinal or true axis of the ferrule. However, as discussed hereinabove, according to embodiments of the invention, the bore formed in the ferrule is misaligned from the ferrule's true center axis.

The next step 95 is to insert an optical fiber into the offset bore. The insertion step 95 is performed, for example, in a conventional manner. That is, an end portion of the optical fiber is stripped of its cladding and inserted into through the axially-extending bore until the end portion of the optical fiber extends through the distal end face of the ferrule.

The next step 97 is to cleave the fiber end near the ferrule end face. Such cleaving step 97 is performed, for example, conventionally by a cleaving device. It is desired that the end portion of the optical fiber be cleaved relatively close to the distal end face of the ferrule, to minimize subsequent polishing efforts. Alternatively, the cleaving step 97 is performed prior to the insertion step 95.

The next step 99 is to polish the fiber end to be substantially planar with the ferrule end face. The polishing step 99 is performed, for example, in a conventional manner. Once the end portion of the optical fiber is polished, the ferrule and optical fiber positioned therein are ready for alignment with other ferrules within, for example, an optical fiber ferrule connector.

It will be apparent to those skilled in the art that many changes and substitutions can be made to the embodiments of the optical fiber ferrules herein described without departing from the spirit and scope of the invention as defined by the appended claims and their full scope of equivalents.

## Claims

1. An offset launch coupling for use in an optical fiber communication system, comprising:
a first ferrule body (74) having an axially-extending bore (88) formed therein, the axially-extending bore having a single-mode optical fiber positioned therein, said first ferrule having a first longitudinal axis;
a second ferrule body (72) having an axially-extending bore (82) formed therein, the axially-extending bore having a multimode optical fiber positioned therein, said second ferrule having a second longitudinal axis; and
a ferrule connector (10) for coaxially aligning said first and second ferrules,
characterized in that
the axis of at least one of the first and second axially-extending bores (82, 88) is radially offset from the respective one of said first and second longitudinal axes.

2. The offset launch coupling as recited in claim 1, wherein said multimode optical fiber has a diameter of approximately 50 microns (µm) and wherein the axis of the at least one axially-extending bore is radially offset from the longitudinal axis of its respective ferrule body by a distance within the range from approximately 6-20 microns (µm).

3. The offset launch coupling as recited in claim 1, wherein said multimode optical fiber has a diameter of approximately 62.5 microns (µm) and wherein the axis of the at least one axially-extending bore is radially offset from the longitudinal axis of its respective ferrule body by a distance within the range from approximately 13-27 microns (µm).

4. The offset launch coupling as recited in claim 1, wherein the axis of the at least one radially offset, axially-extending bore is substantially parallel with the longitudinal axis of the respective ferrule body.

5. The offset launch coupling as recited in claim 1, wherein the axis of the axial-extending bore of said first ferrule body is radially offset from the longitudinal axis of said first ferrule body in such a way that the single-mode optical fiber is offset from the multimode optical fiber in such a way that an offset launch condition is created.

6. The offset launch coupling as recited in claim 1, wherein the axis of the axial-extending bore of the second ferrule is radially offset from the longitudinal axis of the said second ferrule body in such a way the multimode optical fiber is offset from the single-mode optical fiber in such a way that an offset launch condition is created.

7. An optical fiber connector ferrule, comprising a ferrule body (72) having a longitudinal axis and an axially-extending bore (82) formed in said ferrule body, wherein said axially-extending bore has a bore axis,
characterized in that
said axially-extending bore is formed in said ferrule body in such a way that the bore axis is radially offset from the longitudinal axis of the ferrule body.

8. The apparatus as recited in claim 7, wherein the bore axis of said axially-extending bore is radially offset from the longitudinal axis of said ferrule body by a distance within the range from approximately 6-27 microns (µm).

9. The apparatus as recited in claim 7, wherein the bore axis is substantially parallel with the longitudinal axis of the ferrule body.

10. The apparatus as recited in claim 7, further comprising a stripped optical fiber inserted into said axially-extending bore, the stripped optical fiber having a distal end substantially planar with a surface of said ferrule body normal to said axially-extending bore.
